Europäisches Patentamt

European Patent Office

Office européen des brevets

(11) Veröffentlichungsnummer: **0 422 482 A2**

# (12) EUROPÄISCHE PATENTANMELDUNG

(21) Anmeldenummer: 90118846.6

(22) Anmeldetag: 02.10.90

(51) Int. Cl.⁵: **G06K 1/12, G06K 19/067**

(30) Priorität: 07.10.89 DE 3933542

(43) Veröffentlichungstag der Anmeldung:
17.04.91 Patentblatt 91/16

(84) Benannte Vertragsstaaten:
AT BE CH DE DK ES FR GB GR IT LI LU NL SE

(71) Anmelder: **KG CATTS GESELLSCHAFT FÜR ERKENNUNGS- & SICHERHEITSTECHNOLOGIE MBH & CO.**
Berliner Strasse 20
W-2200 Elmshorn(DE)

(72) Erfinder: **Bartels, Holger**
**Dethlefsen Strasse 6**
**W-2200 Elmshorn(DE)**
Erfinder: **Diekmann, Rainer**
**Eichkamp 17 D**
**W-2000 Wedel(DE)**

(74) Vertreter: **Schaefer, Konrad**
**Gehölzweg 20**
**W-2000 Hamburg 70(DE)**

(54) Kodiervorrichtung zum nachträglichen Kodieren elektrisch leitender Kodeanordnungen.

(57) Eine Kodiervorrichtung zum nachträglichen Kodieren von unkodiert vorgefertigten Kodeanordnungen, die aus einem Material bestehen, das eine höhere elektrische Leitfähigkeit ausweist als seine Umgebung, wobei die Kodeanordnung Paare von kapazitiv koppelbaren Koppelstellen aufweist, die jeweils durch eine Verbindung elektrisch leitend verbunden sind, wobei die Verbindungen von der Kodiervorrichtung durch Entfernen von Flächenteilen der Verbindungen nachträglich kodiert werden, ist dadurch gekennzeichnet, daß die Kodiervorrichtung einen Generator aufweist, der Leistung erzeugt, welche derart in die Verbindungen eingebracht wird, daß diese durch Überhitzung wenigstens in Teilen ihrer Fläche nichtleitend werden.

Fig 8

EP 0 422 482 A2

# KODIERVORRICHTUNG ZUM NACHTRÄGLICHEN KODIEREN ELEKTRISCH LEITENDER KODEANORDNUN-GEN.

Die Erfindung betrifft eine Kodiervorrichtung der im Oberbegriff des Anspruches 1 genannten Art.

Eine solche Kodiervorrichtung dient dazu, eine Kodeanordnung zu kodieren, wie sie in der DE-OS 22 52 046 beschrieben ist. Es ist dort erwähnt, daß die Kodeanordnung unkodiert vorgefertigt sein kann und anschließend durch Auftrennen der Verbindungen mittels Wegkratzen kodiert werden kann. Dazu erforderliche Kodiervorrichtungen sind als handbetätigte Kratzgriffel oder auch als automatische Kratzmaschinen denkbar.

Das Wegkratzen von Verbindungen in der Kodeanordnung bringt aber Nachteile mit sich. Es erbeben sich stets unebene Oberflächen, die nur schwierig mit einer glatten Decklackierung versehen werden können. Außerdem besteht beim Wegkratzen elektrisch leitender Schichten stets die Gefahr, daß leitende Brücken übrig bleiben. Ferner entsteht elektrisch leitfähiger Schleifstaub, der zu Störungen an anderen Stellen führen kann. Es muß also beim Wegkratzen sehr saüber gearbeitet werden, was zeitaufwendig und teuer ist. Eine derartige Methode ist beispielsweise zur Massenherstellung von Scheckkarten nicht denkbar. Mit derartigen mechanischen Methoden ist ferner hohe Bearbeitungspräzision nicht erreichbar.

Die Aufgabe der vorliegenden Erfindung besteht daher darin, eine einfachere, schneller und kostengünstiger arbeitende Kodiervorrichtung der eingangs genannten Art zu schaffen.

Diese Aufgabe wird erfindungsgemäß mit den Merkmalen des Kennzeichnungsteiles des Anspruches 1 gelöst.

Erfindungsgemäß werden die Verbindungen nicht weggekratzt, sondern es wird Energie eingeleitet, die zur Überhitzung zumindest von Flächenbereichen der Verbindungen führt. Dies kann auf unterschiedliche Weise, nämlich durch Oxidieren, Verdampfen oder Wegdiffundieren dazu führen, daß Flächenbereiche der Verbindungen nichtleitend werden und somit kodiert werden. Insbesondere kann eine solche Kodiervorrichtung schnell, sauber und ohne Oberflächenveränderungen arbeiten. Unter Umständen ist es sogar möglich, durch eine bereits über der Kodeanordnung vorgesehene Deckschicht hindurch zu arbeiten. Durch einfache Leistungserhöhung des Generators kann die Arbeitsgeschwindigkeit weitgehend beliebig erhöht werden, so daß die erfindungsgemäße Kodiervorrichtung insbesondere auch für Hochgeschwindigkeitsmassenherstellung einsetzbar ist.

Vorteilhaft sind dabei die Merkmale des Anspruches 2 vorgesehen. Bei dieser Konstruktion wird ein Laserstrahl auf die Verbindungen gebündelt und erhitzt diese. Laserstrahlen sind bekanntlich sehr gut fokussierbar sowie sehr präzise und extrem schnell steuerbar.

Alternativ dazu können die Merkmale des Anspruches 3 vorgesehen sein. Bei dieser Konstruktion wird elektrische Leistung durch kapazitive Kopplung eingebracht, und zwar in einer Höhe, die zu einer Überhitzung der Verbindungen führt. Diese Methode hat den Vorteil, daß sie besonders schonend arbeitet und insbesondere auch noch unter einer bereits vorgesehenen Abdeckung verwendet werden kann.

In den Zeichnungen ist die Erfindung beispielsweise und schematisch dargestellt. Es zeigen:

Fig. 1 eine Draufsicht auf eine Kodeanordnung mit Lesevorrichtung,

Fig. 2 einen Schnitt nach Linie 2 - 2 in Fig. 1,

Fig. 3 das elektrische Ersatzschaltbild zur Anordnung der Fig. 1 und 2,

Fig. 4 eine vereinfachte Darstellung gemäß Fig. 1 einer Variante der Kodeanordnung,

Fig. 5 eine Darstellung gemäß Fig. 4 einer weiteren Variante der Kodeanordnung,

Fig. 6 eine Darstellung gemäß Fig. 4 einer weiteren Variante der Kodeanordnung,

Fig. 7 in perspektivisch stark schematisierter Darstellung eine mit Laserstrahl arbeitende Kodiervorrichtung,

Fig. 8 eine Darstellung einer anderen Ausführungsform der Kodiervorrichtung und

Fig. 9 einen Schnitt nach Linie 9 - 9 in Fig. 8.

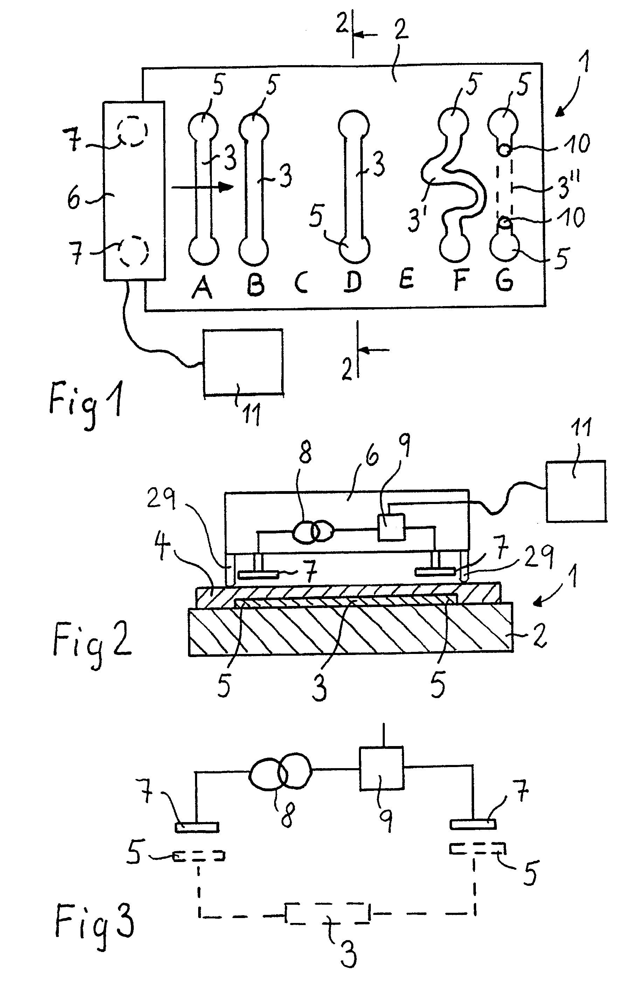

Zunächst sei die erfindungsgemäß zu kodierende Kodeanordnung erläutert. Anhand der Fig. 1 bis 3 wird zunächst das Prinzip der Kodeanordnung in einem einfachen Ausführungsbeispiel erläutert.

Eine Karte 1, die beispielsweise nach Art einer Scheckkarte ausgebildet ist, trägt eine Kodeanordnung, die zu hier nicht interessierenden Zwecken dient, beispielsweise zur Klärung von Zugangsberechtigungen an Türen, zum Zwecke des bargeldlosen Zahlungsverkehres oder dergleichen. Die Karte 1 besteht im dargestellten einfachen Ausführungsbeispiel aus einer Substratplatte 2, die aus elektrisch nicht leitendem Material besteht, beispielsweise aus Kunststoff. Auf ihr ist eine Kodeanordnung aus elektrisch leitfähigem Material aufgebracht, beispielsweise aus Kupfer. Diese besteht im dargestellten Ausführungsbeispiel aus einem Strichkode, bestehend aus Verbindungen 3, die an den Kodierstellen A bis G angeordnet sind. Über die Kodieranordnung (Verbindungen 3) hinweg ist, wie Fig. 2 zeigt, eine Abdeckung 4 vorgesehen, die, wie die Substratplatte 2, aus elektrisch nicht leitendem Material, beispielsweise Kunststoff, besteht. Das Material der Abdeckung 4 ist für das Auge undurchsichtig, so daß nach Abdeckung der Verbindungen 3 deren Anordnungen und Lage nicht mehr erkennbar ist. Die Abdeckung 4 kann beispielsweise als Lackschicht aufgebracht sein. Zu Zwecken der besseren Darstellung ist in Fig. 1 die Abdeckung 4 weggelassen.

An den Enden der Verbindungen 3 sind diese verbreitert als Koppelstellen 5 ausgebildet. Die Koppelstellen 5 liegen jeweils genau an den Kodierstellen A bis G. Eine Lesevorrichtung 6 ist in Richtung des Pfeiles in Fig. 1 über die Karte 1 bewegbar. An ihrer Unterseite weist sie zwei im dargestellten Ausführungsbeispiel kreisförmig ausgebildete Elektroden 7 auf, die bei Bewegung der Lesevorrichtung 6 in Richtung des Pfeiles der Fig. 1 nacheinander über die Koppelstellen 5 gelangen.

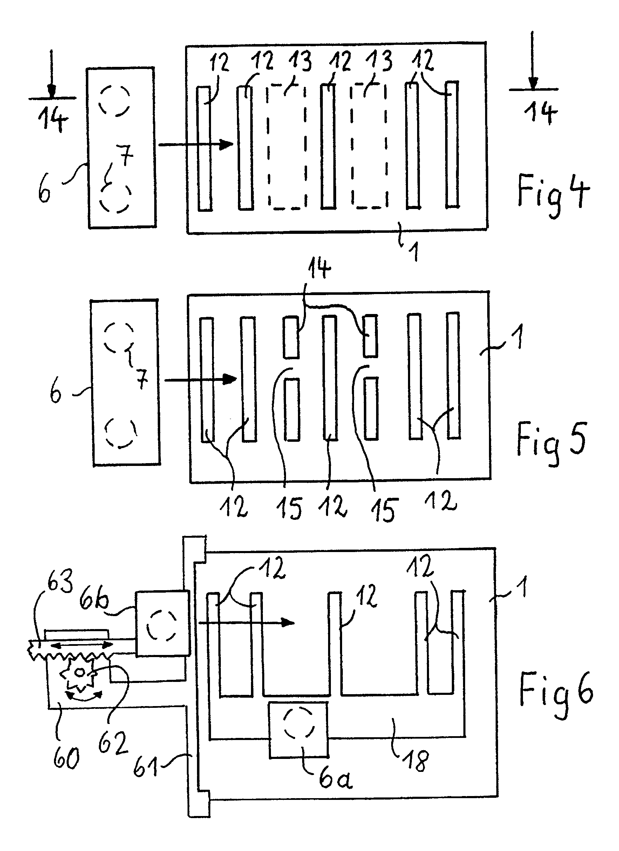

Fig. 3 zeigt das elektrische Ersatzschaltbild. Die Elektroden 7 bilden zusammen mit den Koppelstellen 5 einen Kondensator, während die Verbindungen 3 einen ohmschen Widerstand ausbilden. Innerhalb der Lesevorrichtung 6 ist ein Wechselstromkreis vorgesehen mit einem Wechselspannungs-Generator 8 und einem Detektor 9, wobei dieser Wechselstromkreis zwischen den Elektroden 7 offen ist.

Wird die Lesevorrichtung 6 gemäß dem Pfeil in Richtung 1 bewegt, so kommen ihre Elektroden 7 nacheinander in kapazitiv koppelnden Eingriff mit den Koppelstellen 5 der jeweiligen Verbindungen 3. Immer, wenn koppelnder Eingriff herrscht, fließt der von dem Generator 8 erzeugte Wechselstrom über die Kondensatoren 5, 7 und durch den Widerstand der Verbindungen 3, so daß der Detektor 9 Stromfluß anzeigt. Die jeweils beaufschlagte Verbindung 3 zwischen den Koppelstellen 5 dient also als Teil des Wechselstromkreises und schließt den in der Lesevorrichtung 6 vorgesehenen Teil 7, 8, 9, 7 des Wechselstromkreises.

Die vom Generator 8 erzeugte Wechselspannung ist eine Dauerwechselspannung, die ständig erzeugt wird. Sie hat vorzugsweise eine relativ hohe Frequenz, die typischerweise im Hochfrequenzbereich oberhalb 100 kHz liegen kann. Fährt nun die Lesevorrichtung 6 mit einer schon relativ hohen Geschwindigkeit von beispielsweise 1 m/sec. über die Kodeanordnung hinweg und haben die Koppelstellen 5 beispielsweise eine Breite von 1 mm, so ergibt sich eine kapazitive Koppelung zwischen den Elektroden 7 und den Koppelstellen 5 während eines Zeitraumes in der Größenordnung einer Millisekunde. Bei einer Frequenz von 1 Mega-Hz ergeben sich dann aber bereits etwa 1000 Wechselspannungsperioden während der Dauer der Koppelung. Der Detektor 9 kann also in einem ungestörten Bereich reinen Wechselstromes seine Messung vornehmen, also völlig unbeeinflußt von irgendwelchen Ein-und Ausschwingvorgängen.

Fährt gemäß Fig. 1 die Lesevorrichtung 6 den dargestellten Kode ab, so zeigt sie Stromfluß an den Kodierstellen A, B, D, F und G an, nicht aber bei C und bei E. Es ergibt sich also der Kode 1-1-0-1-0-1-1.

Wie Fig. 1 zeigt, kommt es bei den Verbindungen 3 nur darauf an, daß diese die jeweiligen Koppelstellen 5 miteinander verbinden. Diese Verbindung muß nicht geradlinig sein. An der Kodestelle F ist die Verbindung 3' gewunden ausgeführt. Sie erfüllt denselben Zweck wie die geradlinigen Verbindungen 3 an den vorhergehenden Kodestellen. An der Kodestelle G verläuft ein Teil der Verbindung 3" auf der Rückseite der Karte und ist an den Stellen 10 zur Vorderseite durchkontaktiert. Dies nur als Beispiel für die vielfältigen Ausbildungsmöglichkeiten der Verbindung.

Die Lesevorrichtung 6 kann an ihrem Detektor 9 eine Ausgangsleitung aufweisen, die das Detektorsignal zu einer beispielsweise extern vorgesehenen Auswerteinrichtung 11 führt, welche zum Beispiel mittels Computerunterstützung den Kode auswertet und erkennt.

Die in den Fig. 1 und 2 dargestellte Kodeanordnung kann von der Lesevorrichtung 6 abgelesen werden, gleichgültig, ob die Abdeckung 4 vorgesehen ist oder nicht. Besonders vorteilhaft sind natürlich Kodeanordnungen mit für das Auge undurchsichtiger Abdeckung 4, da bei ihnen der Kode nicht mit dem Auge erkannt werden kann. Für spezielle Anwendungen ist aber auch eine Kodeanordnung ohne Abdeckung einsetzbar.

Als Beispiel sei hier der Einsatz der erfindungsgemäßen Kodeanordnung zur Prozeßsteuerung bei der Lackierung von Kfz-Kotflügeln erwähnt. An einer bestimmten Stelle der Kotflügel ist eine Kodeanordnung gemäß den Fig. 1 und 2 angebracht, wobei als elektrisch isolierende Substratplatte 2 die Grundierungsschicht des Kotflügels dient, auf der die Kodeanordnung mit geeignetem leitfähigen Material aufgebracht ist. Mit der Kodeanordnung können unterschiedliche Kotflügel gekennzeichnet werden, beispielsweise vordere, hintere, linke und rechte Kotflügel für unterschiedliche Modellvarianten des Kraftfahrzeuges. Vor der Endlackierung liegt die Kodeanordnung frei. Nach der Endlackierung ist die Kodeanordnung unsichtbar unter dem Lack verborgen, der gemäß Fig. 2 die Abdeckung 4 ausbildet. Auch nach der Endlackierung kann der Kotflügel noch mit einer Lesevorrichtung 6 anhand der Kodeanordnung identifiziert werden.

Als weiteres Beispiel sei genannt die nach ästhetischen Gesichtspunkten gestaltete teure Verpackungsschachtel eines hochwertigen Parfums. Auf dieser ist auf dem als Substratplatte dienenden Karton eine Kodeanordnung aufgebracht. Anschließend ist die gesamte Schachtel hochwertig lackiert, also auch über die Kodeanordnung hinweg. Die Kodeanordnung ist dann von außen nicht mehr sichtbar und stört nicht den ästhetischen Eindruck der Schachtel. Dennoch sind die Schachteln anhand ihrer individuellen Kodierung identifizierbar, z.B. zu Zwecken der Verfolgung auf ihrem Vertriebsweg.

Die Koppelstellen 5 der Fig. 1 sind in ihrer Breite gegenüber den Verbindungen 3 vergrößert, um eine hohe Kapazität gegenüber den als Plattenelektroden dargestellten Elektroden 7 zu ergeben. Bei empfindlicheren Detektorschaltungen ist dies nicht notwendig.

Fig. 4 zeigt einen einfachen Strichkode (wie auch bei den übrigen Darstellungen, ist hier, entsprechend der Figur 1, eine undurchsichtige Abdeckung 4 weggelassen). Die Kodeanordnung der Fig. 4 besteht aus einem Strichkode, bei dem die leitfähigen Striche 12 rechteckig langgestreckt ausgebildet sind. Die Lesevorrichtung 6 wird wiederum in Pfeilrichtung bewegt. Sie kommt an den gegenüberliegenden Ende der Striche 12 in koppelnden Eingriff, entsprechend der Darstellung der Fig. 2. Der Kode weist zwei fehlende Striche auf (gestrichelte Rechtecke). Dadurch ergibt sich die Kodeinformation beim Ablesen des Strichkodes.

Die anhand der Fig. 4 beschriebene Kodeanordnung stellt einen Positivkode dar, bei dem an den kodierten Stellen Striche aus elektrisch leitfähigem Material vorhanden sind, während an den Stellen 13, an denen Striche fehlen, nur elektrisch nichtleitendes Material vorhanden ist. Die Kodierung kann aber auch umgekehrt als Negativkode ausgebildet sein. Dann ist die gesamte Fläche der Karte 1 mit elektrisch leitfähigem Material beschichtet, und an den Stellen der Striche 12 ist das elektrisch leitfähige Material ausgespart. Fährt auf einer solchen Kodeanordnung die Lesevorrichtung 6 in Pfeilrichtung über die Kodeanordnung hin, so stellt sie überall leitfähige Verbindung zwischen den Elektroden fest außer an den Strichen 12, an denen leitfähiges Material fehlt.

In einer anderen Ausführungsform, die anhand der Fig. 4 beschrieben werden kann, ist der Detektor 9 der Lesevorrichtung 6 so ausgebildet, daß er den elektrischen Widerstand R der Verbindung 3 quantitativ auswerten kann. Der Detektor 9 ist also auf einfache Weise nach Arte eines Widerstandsmeßgerätes auszubilden. Wenn in Fig. 4 an Stelle der Kodelücken verbreiterte Striche 13 vorgesehen sind (gestrichelt), die, wie in Figur 4 dargestellt, beispielsweise die doppelte Breite der Striche 12 haben, und folglich über ihre Länge etwa den halben ohmschen Widerstand, so kann die Lesevorrichtung 6 dies auswerten und erkennt auf diese Weise den Kode.

Unterschiedliche ohmsche Widerstände der Verbindungen zwischen den Koppelstellen an den Enden der Striche 12 bzw. 13 können, wie erwähnt, durch unterschiedliche Breite der Striche 12 bzw. 13 erhalten werden. Die Striche können aber auch aus unterschiedlich dickem Material gefertigt werden oder aus Material unterschiedlicher Leitfähigkeit.

Eine solche Kodeanordnung kann beispielsweise gedruckt werden aus leitfähiger Farbe. Striche doppelter Dicke können durch Doppeldruck erhalten werden. Die Herstellung einer solchen Kodeanordnung in einem Druckverfahren kann sehr kostengünstig erfolgen. Geeignet leitfähige Farben, die beispielsweise Kohlenstoffpartikel enthalten, sind handelsüblich verfügbar.

Fig. 5 zeigt eine Variante, bei der alle Striche gleich lang und gleich breit sind. Die kodierten Striche 14 weisen jedoch Unterbrechungen 15 auf. Eine derartige Kodeanordnung kann sehr kostengünstig ausgebildet sein, indem sie mit gleichen ununterbrochenen Strichen 12 unkodiert hergestellt und in einem anschließenden Kodiervorgang mit Unterbrechungen 15 an den zu kodierenden Stellen versehen wird. Dies kann beispielsweise dadurch erfolgen, daß die Unterbrechungen 15 mechanisch weggekratzt werden, weggeätzt werden od. dgl.

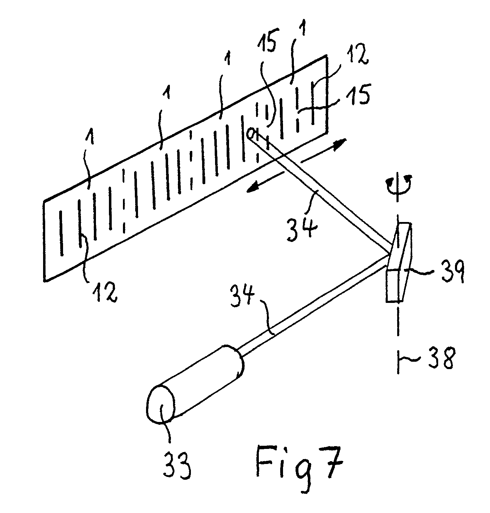

Fig. 6 zeigt eine Variante, die wiederum den Kode der Figur 4 mit Strichen 12 enthält. An zwei Stellen fehlt ein Strich, wodurch die Kodierung auf einfache Weise erhalten ist. Die Kodeanordnung der Fig. 6 unterscheidet sich von der der Fig. 4 dadurch, daß die Striche 12 an ihrem unteren Ende kammartig mit einer Verbindungsbahn 18 verbunden sind. Die Lesevorrichtung kann hier zweiteilig ausgebildet sein mit einem feststehenden Teil 6a, der während des Lesevorgangs in koppelndem Eingriff mit der Verbindungsbahn 18 feststehen kann und mit einem Teil 6b, der in Richtung des Pfeiles genauso bewegt wird wie die Lesevorrichtung 6, gemäß Fig. 4, also mit ihrer Elektrode die oberen Enden der Striche 12 abfährt.

Bei der Ausführungsvariante der Fig. 6 wird der bewegliche Teil 6b der Lesevorrichtung über die Kodeanordnung bewegt. Es handelt sich hierbei um eine Relativbewegung zwischen dem Teil der Lesevorrichtung und der Kodeanordnung, die erzeugt werden kann, entweder durch Bewegung des Teiles der Lesevorrichtung oder durch Bewegung der Kodeanordnung. Ebenso kann auch im Falle der Ausführungsform der Fig. 1 und 2 wahlweise bei feststehender Karte 1 die Lesevorrichtung 6 bewegt werden oder bei feststehender Lesevorrichtung 6 die Karte 1 bewegt werden.

Die Relativbewegung zwischen Karte 1 und der beweglichen Lesevorrichtung 6b kann, wie in der Fig. 6 dargestellt, durch einen Motorantrieb erzeugt werden. Ein Motor 60 ist mit einer Klammer 61 an der Karte befestigt und treibt über ein Ritzel 62 eine Zahnstange 63, die am beweglichen Teil 6b der Lesevorrichtung befestigt ist. Entsprechende Motorantriebe können auch beispielsweise bei der Konstruktion der Fig. 1 vorgesehen sein, um eine Relativbewegung zwischen Lesevorrichtung 6 und Karte 1 zu erzeugen.

Anhand der Fig. 5 wurde eine Kodeanordnung erläutert, bei der einzelne Striche 14 des Strichkodes nachträglich durch Schaffung von Unterbrechungen 15 kodiert werden können. Auch die übrigen in den Fig. 1 bis 6 dargestellten Kodeanordnungen können auf diese Weise kodiert werden, indem sie unkodiert vorgefertigt und anschließend durch Entfernung von Flächenbereichen der Verbindungen 3 kodiert werden.

Die Erfindung setzt zu diesem Zweck Kodiervorrichtungen ein, die Energie in solcher Höhe und Konzentration zumindest in Flächenbereiche der Verbindungen einbringt, daß diese durch Überhitzung nichtleitend werden. Zur Energieerzeugung und Konzentrierung sind verschiedene Methoden verwendbar, wie beispielsweise gebündelte Wärmestrahlung, Berührung mit heißen Gegenständen, wie etwa einem Lötkolben od. dgl.

Je nach Ausbildung der Kodeanordnung sind unterschiedliche physikalische oder chemische Vorgänge wirksam, die bei Überhitzung von Flächenbereichen der Verbindung zu einer nichtleitend machenden Zerstörung des elektrisch leitfähigen Materiales der Kodeanordnung führen. Das Material kann beispielsweise bei höheren Temperaturen unter Luftzufuhr oxidieren und damit nichtleitend werden. Es kann verdampfen oder einfach in das umgebende Material so weit diffundieren, bis keine Leitfähigkeit mehr vorliegt. Dies hängt von der Art des Materiales der Kodeanordnung ab. Bestimmte leitfähige Farben, die auch für die Herstellung der Kodeanordnung gut geeignet sind, zeichnen sich dadurch aus, daß bereits bei geringer Überhitzung die Leitfähigkeit völlig zerstört wird.

Die Fig. 7 bis 9 zeigen Kodiervorrichtungen für den erfindungsgemäßen Zweck.

Fig. 7 zeigt eine nach dem Laserprinzip arbeitende Kodiervorrichtung.

Ein Streifen mit vier Karten 1, die beispielsweise der Ausführungsform der Fig. 4 entsprechen, kommt als Druckbogen aus einer Druckmaschine, die Striche 12 aufgedruckt hat, und zwar pro Karte jeweils vier Striche. An gestrichelt dargestellten Trennlinien sind die dargestellten vier Karten anschließend trennbar. Eine Abdeckung 4 über den Kodeanordnungen ist noch nicht vorgesehen. Der dargestellte Druckbogen gelangt zu der in Fig 7 dargestellten Kodiereinrichtung, bestehend aus einem Lasergenerator 33, der einen Laserstrahl 34 aussendet. Der Laserstrahl wird von einem um die Achse 38 schwenkbar gelagerten ·Spiegel 39 auf die Karten 1 reflektiert. Durch Schwenken des Spiegels 39 in Pfeilrichtung mit nicht dargestellten beispielsweise von einem Computer steuerbaren Schwenkeinrichtungen kann der Laserstrahl 34 gezielt auf bestimmte Striche 12 gerichtet werden, um diese mit Durchbrechungen 15 zu versehen. Der Laserstrahl hat derart ausreichend hohe Leistung, daß er bei längerem Verweilen auf einem Strich diesen wegbrennt.

Durch Verschwenken des Spiegels 39 wird der Laserstrahl 34 über die Karten 1 hinweg auf einer geraden Linie bewegt. Die Steuerung des Spiegels 39 kann auch in zwei Richtungen erfolgen, so daß der Strahl jeweils die gesamte Fläche der Kodeanordnung bestreichen kann.

Anschließend an die Laserstrahlbearbeitung wird der Streifen mit den dargestellten vier Karten 1 mit der Abdeckung 4 versehen und sodann an den gestrichelten Stellen aufgetrennt.

Alternativ zur Ablenkung des Laserstrahles mit einem Schwenkspiegel, wie in Fig. 7 dargestellt, kann die Strahlsteuerung auf andere Weise vorgenommen werden, beispielsweise mittels einer verschwenkbaren, den Laserstrahl leitenden Lichtleitfaser oder durch akusto-optische Ablenkeinrichtungen. Anstelle den Laserstrahl zu positionieren, können auch die Karten 1 gegenüber einem feststehenden Laserstrahl bewegt werden.

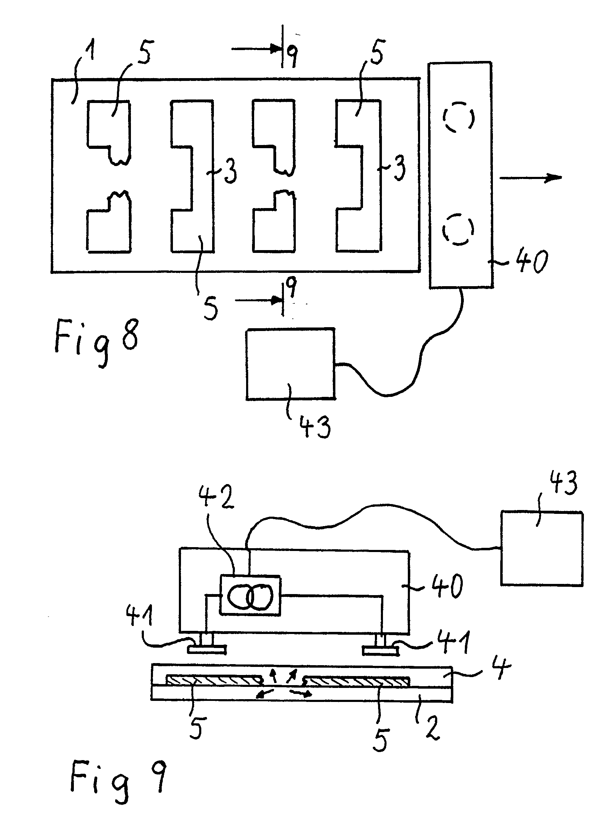

Die Fig. 8 und 9 zeigen eine weitere Kodiereinrichtung 40, mit der eine unkodierte Kodeanordnung nachträglich kodiert werden kann. Fig. 8 zeigt in der Draufsicht eine Karte 1 mit einer Kodeanordnung, bestehend aus Strichen, die jeweils am Ende zu einer großflächigen Koppelstelle 5 verbreitert sind, zwischen denen Verbindungen 3 angeordnet sind. Die Kodiervorrichtung 40 entspricht weitgehend der Lesevorrichtung 6 der Ausführungsform der Fig. 1 bis 3. Sie weist zwei Elektroden 41 auf, die entsprechend wie bei einer Lesevorrichtung angeordnet sind.

Zwischen den Elektroden ist in der Kodiervorrichtung 40 ein Leistungsstromgenerator 42 angeschlossen, der von außen über eine flexible Leitung von einem Steuergerät 43 an- und ausschaltbar ist. Die Kodiervorrichtung 40 fährt in Pfeilrichtung über die Kodeanordnung (alternativ kann zur Erzeugung der gewünschten Relativbewegung auch die Kodeanordnung gegenüber der Kodiervorrichtung bewegt werden), so daß ihre Elektroden 41 in kapazitiv koppelnden Eingriff mit den Koppelstellen 5 gelangen können. Soll einer der dargestellten Striche 3, 5 kodiert werden, so wird der Leistungsstromgenerator 42 eingeschaltet und erzeugt einen derart hohen Stromfluß zwischen den Koppelstellen 5, daß die Verbindung 3 wegbrennt, wie in Fig. 8 an dem von links gesehen ersten und dritten Strich dargestellt. Auf diese Weise können einzelne Striche kodiert werden, so daß eine Kodierung entsteht, die etwa der in Fig. 5 dargestellten Kodierung entspricht.

Die Kodiervorrichtung 40 kann an noch nicht abgedeckten offenliegenden Kodeanordnungen eingesetzt werden. Ihr großer Vorteil besteht aber darin, daß sie auch eingesetzt werden kann an völlig fertiggestellten Karten 1, die bereits mit Abdeckung 4 versehen sind, wie dies im Schnitt die Fig. 9 zeigt. Bei Strombeaufschlagung mit hoher Leistung wird die Verbindung zwischen den Koppelstellen 5 stark erwärmt. Das Material, aus dem die Verbindung 3 besteht, also ein elektrisch leitfähiges Material, diffundiert (Pfeile in Fig. 9) in die umgebenden Materialien hinein, also beispielsweise in die Abdeckung 4 hinein oder in die Substratplatte 2 hinein, bis die Verbindung unterbrochen ist. Durch geeignete Wahl der Materialien der Abdeckung 4 und der Substratplatte 2 kann die Diffusion erleichtert werden, so daß bereits bei relativ niedrigen Temperaturen die Verbindung 3 zwischen den Koppelstellen 4 unterbrochen werden kann, also beispielsweise bei so niedrigen Temperaturen, daß auf der Oberfläche der Abdeckung 4 keine sichtbare Veränderung (Beulen, Schwärzung od. dgl.) erkennbar ist.

**Ansprüche**

1. Kodiervorrichtung zum nachträglichen Kodieren von unkodiert vorgefertigten Kodeanordnungen (3, 5; 12, 13; 12, 14, 15; 12, 18), die aus einem Material bestehen, das eine höhere elektrische Leitfähigkeit ausweist als seine Umgebung (2, 4), wobei die Kodeanordnung Paare von kapazitiv koppelbaren Koppelstellen (5) aufweist, die jeweils durch eine Verbindung (3) elektrisch leitend verbunden sind, wobei die Verbindungen von der Kodiervorrichtung durch Entfernen von Flächenteilen (15) der Verbindungen nachträglich kodiert werden, dadurch gekennzeichnet , daß die Kodiervorrichtung einen Generator (33, 42) aufweist, der Leistung erzeugt, welche derart in die Verbindungen (3) eingebracht wird, daß diese durch Überhitzung wenigstens in Teilen (15) ihrer Fläche nichtleitend werden.

2. Kodiervorrichtung nach Anspruch 1, dadurch gekennzeichnet , daß die Kodiervorrichtung einen Lasergenerator (33) zur Erzeugung eines Leistungs-Laserstrahles (34) aufweist sowie eine Strahlsteuereinrichtung (39), die den Strahl derart über eine oder mehrere im Strahlengang angeordnete Kodeanordnungen (12) lenkt, daß Verbindungen (12) der Kodeanordnung in vorgewählter Kodierung vom Strahl beaufschlagt werden.

3. Kodiervorrichtung nach Anspruch 1, dadurch gekennzeichnet , daß wenigstens ein Paar von Elektroden (41) vorgesehen ist, die mit elektrisch verbundenen Koppelstellen (5) der Kodeanordnung (3, 5) in berührungslosen kapazitiven Eingriff bringbar sind und die die freien Enden eines zwischen den Elektroden offenen Wechselstromkreises bilden, der einen Leistungsstromgenerator (42) aufweist, der bei Betätigung eine derartige Leistung erzeugt, daß die Verbindung (3) zwischen den mit den Elektroden (41) gekoppelten Koppelstellen (5) derart erwärmt wird, daß sie nichtleitend wird.

Fig 1

Fig 2

Fig 3

Fig 4

Fig 5

Fig 6

8

Fig 7

Fig 8

Fig 9